(19) **Europäisches Patentamt**

**European Patent Office**

**Office européen des brevets**

(11) **EP 1 463 411 B1**

(12) **FASCICULE DE BREVET EUROPEEN**

(45) Date de publication et mention
de la délivrance du brevet:
**09.11.2005 Bulletin 2005/45**

(51) Int Cl.⁷: **A01N 59/16**

(21) Numéro de dépôt: **03709875.3**

(22) Date de dépôt: **13.01.2003**

(86) Numéro de dépôt international:
**PCT/FR2003/000083**

(87) Numéro de publication internationale:
**WO 2003/056923 (17.07.2003 Gazette 2003/29)**

(54) **UTILISATION DU SULFURE DE ZINC COMME AGENT ANTIACARIEN**

VERWENDUNG VON ZINKSULFID ALS AKARIZIDE

USE OF ZINC SULFIDE AS AN ANTI-MITE AGENT

(84) Etats contractants désignés:
**AT BE BG CH CY CZ DE DK EE ES FI FR GB GR
HU IE IT LI LU MC NL PT SE SI SK TR**

(30) Priorité: **11.01.2002 FR 0200317**

(43) Date de publication de la demande:
**06.10.2004 Bulletin 2004/41**

(73) Titulaire: **Rhodianyl
92512 Boulogne-Billancourt Cédex (FR)**

(72) Inventeurs:
• **ROCHAT, Sandrine
F-69100 Villeurbanne (FR)**

• **VIDIL, Christine
F-69360 Communay (FR)**

(74) Mandataire: **Esson, Jean-Pierre
Rhodia Services,
Direction de la Propriété Industrielle,
Crit-Carrières,
B.P. 62
69192 Saint-Fons Cédex (FR)**

(56) Documents cités:
**EP-A- 0 557 880          WO-A-99/67451
US-A- 5 180 585**

**Description**

L'invention concerne une nouvelle utilisation du sulfure de zinc, à titre d'agent antiacarien. L'invention concerne également des compositions à propriétés antiacariennes comprenant du sulfure de zinc comme additif, notamment des compositions polymériques ainsi que des fils, fibres, filaments et articles obtenus à partir de ces compositions ; elle vise aussi des compositions liquides ou solides pour le nettoyage et/ou le traitement de surfaces textiles, notamment de tapis ou moquettes.

Les acariens sont nuisibles non seulement pour l'agriculture, les jardins, la sylviculture, mais également pour l'homme. Ils peuvent provoquer notamment des allergies, de l'asthme, des rhinites ou conjonctivites chez ce dernier. Dans l'habitat humain par exemple, les acariens sont présents en quantité non négligeable notamment dans les tapis, les moquettes, l'ameublement, les revêtements de surface, les canapés, les rideaux, la literie, les matelas et oreillers. Dans de nombreuses applications telles que le domaine textile, on cherche donc à limiter le développement d'acariens dans les surfaces textiles par exemple, dans un but de prévention des affections chez l'homme dues aux acariens. Dans les secteurs médicaux il est également de grande importance de limiter le développement des acariens sur les outils de travail, sur les matériaux de construction, sur les vêtements.

Des compositions insecticides et acaricides organiques sont connues notamment dans le domaine de l'agriculture. De telles compositions sont par exemple décrites dans le brevet FR 2710239. Ces compositions peuvent être appliquées par pulvérisation, par vaporisation, par poudrage, par diffusion de granulés et par fumigation, directement ou à l'aide d'appareils, sur des insectes et acariens nuisibles ou sur les lieux où les insectes et acariens nuisibles sont présents.

D'autres agents présentant des propriétés biocides sont connus depuis fort longtemps et sont utilisés par exemple pour des applications cosmétiques ou pour des applications fongicides. Parmi ces agents, les éléments à base de métaux tels que l'argent, le cuivre ou le zinc sont les plus connus.

Afin de conférer aux surfaces textiles des propriétés biocides, de nombreux apprêts contenant des composés bio actifs ont été développés. Toutefois ces apprêts ont toujours une tenue limitée et leur effets disparaissent après un ou plusieurs lavages. Il est donc dans de nombreux cas plus intéressant d'introduire le principe actif directement dans l'article devant présenter une propriété bio active.

A cet effet il est connu d'introduire un agent bio actif dans des fils filés en solution ou filés par coagulation. L'agent bio actif est alors introduit dans le solvant du polymère.

Des agents antiacariens organiques commerciaux sont également connus. On peut citer par exemple le benzoate de benzyle, la perméthrine, le butyl 3 iodo 2 propynyl ester de l'acide carbamique commercialisé par la société Troy sous la référence Kertex 100. Ces agents ne peuvent toutefois pas être introduits dans des polymères thermoplastiques, puisqu'ils ne résistent pas aux températures de mises en forme de ces derniers ou peuvent être transformés à ces températures.

D'autres agents bioactifs pouvant être incorporés dans des polymères thermoplastiques ont été développés. La demande de brevet WO 0111956 décrit par exemple l'utilisation d'un complexe polymère dendritique / composé biocide à base d'au moins un métal ou ion métallique biocide. Ce complexe peut être introduit dans le polymère thermoplastique en fondu.

Pour les polymères mis en forme en phase fondue, il est connu d'introduire des charges inorganiques supportant un élément à base de métal bioactif. Ces charges peuvent être introduites au cours du processus de polymérisation ou au cours du processus de mise en forme. De très nombreuses solutions sont proposées pour la réalisation de charges minérales. Ces charges doivent présenter une dispersabilité suffisante dans la polymère, une couleur acceptable et elles ne doivent pas trop altérer les propriétés des polymères. On peut citer comme exemple de charge minérale antiacarienne un verre chargé en acide borique commercialisé par la société Ishisuka Glass sous la référence Segurocera.

La demande de brevet WO99/67451 décrit un câble en polymère thermoplastique formé d'une pluralité de fibres, chaque fibre comprenant de 0,02 à 5 % en poids de sulfure de zinc. Ce câble peut être coupé pour former du floc ; il réduit l'abrasion des couteaux.

La demande de brevet EP557880 décrit une capsule inorganique poreuse antibactérienne comprenant un agent antibactérien tel que le sulfure de zinc, et un composé inorganique poreux encapsulant l'agent antibactérien. Cette capsule peut être mélangée à une résine synthétique telle que polyester ou polyamide pour une utilisation sous forme de fibres ou d'artides moulés.

Le brevet US5180585 décrit une composition antimicrobienne comprenant des particules coeur (par exemple de TiO2), recouvertes d'une première couche d'un métal ou composé métallique ayant des propriétés anti-microbiennes, et recouvertes d'une deuxième couche de protection, par exemple de silice ou d'alumine. La composition antimicrobienne peut être incorporée dans une matrice polymère.

On recherche toujours de nouvelles charges antiacariennes de faible coût et aisées à mettre en oeuvre dans des compositions polymériques notamment.

Ainsi le sulfure de zinc, charge minérale connue en tant que telle par exemple comme agent matifiant de fils textiles obtenus par filage de compositions polymériques, présente également des propriétés antiacariennes ainsi que les propriétés recherchées au niveau du coût, de la facilité de mise en oeuvre, de l'introduction dans des matrices polymériques : en effet il se disperse aisément dans ces matrices, et il résiste à leurs températures de mise en forme et n'est pas modifié à ces températures.

La présente invention a donc pour premier objet la nouvelle utilisation du sulfure de zinc comme agent anti-acarien.

Dans un second objet, l'invention concerne également des compositions à propriétés antiacariennes comprenant du sulfure de zinc comme additif, et notamment des compositions polymériques.

L'invention concerne enfin, dans un troisième objet, des fils, fibres, filaments et articles obtenus à partir des compositions décrites ci-dessus. Ces fils, fibres, filaments et articles présentent de très bonnes propriétés antiacariennes permanentes.

Le sulfure de zinc de l'invention peut se présenter sous diverses formes : il peut s'agir par exemple d'une particule de sulfure de zinc, d'un revêtement partiel ou total de sulfure de zinc sur une particule de nature différente telle qu'une particule inorganique de silice ou de titane etc. Le sulfure de zinc lorsqu'il est sous la forme d'une particule essentiellement sphérique peut être de faible diamètre, de l'ordre de 0,3 μm, ce qui permet son utilisation dans les fils, fibres, filaments textiles notamment. Le taille des particules de sulfure de zinc de l'invention n'est pas limitée et peut aller jusqu'à plusieurs millimètres. Le sulfure de zinc peut également se présenter sous la forme de plaquettes.

Les acariens appartiennent au groupe des arthropodes divisés en sous-classes : insectes et arachnides. Les acariens sont des arachnides et sont souvent parasites et pathogènes. Il existe une multitude d'acariens connus, plusieurs dizaines de milliers, dont un nombre très limité est nuisible pour l'homme. Les acariens ont une taille de 200 à 500 microns et sont, pratiquement, invisibles à l'oeil. Ils vivent essentiellement dans une atmosphère humide (65 à 80% d'humidité relative), obscure et à des températures moyennes idéales de 15 à 25°C. Leur durée de vie est de +/- 3 mois.

On peut citer comme espèces d'acariens par exemple les espèces des genres Acarus, Tyrophagus et autres. L'espèce Dermatophagoïdes est notamment présente dans les poussières de maison et concerne donc plus particulièrement les nuisances chez l'homme. On retrouve deux variétés de Dermatophagdides, le D.pteronyssinus et le D. farinae. Les acariens de l'espèce Dermatophagoïdes se nourissent principalement de squames humaines et de déchets des ongles, cheveux, poils, de résidus de la nutrition etc. On s'intéresse plus particulièrement dans la présente invention à l'espèce des Dermatophagoïdes.

Selon le premier objet de l'invention, le sulfure de zinc peut être introduit dans tout environnement comprenant des acariens afin de réduire ou éliminer la quantité d'acariens présents dans l'environnement. Par "environnement" on entend tout milieu comprenant au moins des acariens. L'environnnement peut être un gaz, de préférence l'air.

Par "réduire" on entend diminuer la quantité d'acariens présents dans l'environnement , comparée à la quantité présente dans l'environnement avant l'introduction dans l'environnement du sulfure de zinc. Par "réduire" on entend également réduire le taux de croissance des nouveaux acariens dans le temps et dans l'environnement. Par "réduire" on entend aussi réduire le taux de reproduction des acariens. Par "éliminer" on entend éliminer de l'environnement la majorité des acariens, c'est-à-dire tuer les acariens présents dans l'environnement (acaricide) ou les rendre inactifs. Par "éliminer" on entend également prévenir la croissance de nouveaux acariens.

Le sulfure de zinc du premier objet de l'invention peut être utilisé en l'état, c'est-à-dire seul, mais il est de préférence supporté par différents supports inactifs sous forme liquide, solide ou gazeuse. De plus, on peut si nécessaire ajouter des additifs tels qu'un tensioactif, un dispersant, un adhésif, un stabilisant et des propulseurs, pour préparer des formulations telles que des poudres pour poudrage, des granulés, des émulsions, des solutions dans une huile, des poudres mouillables, des sols, des compositions fluentes, des aérosols, des agents d'enrobage, des fumigants, agents de fumage et ULV (formulations pour agents à très faible volume).

La quantité de sulfure de zinc du premier objet de l'invention appliquée peut varier avec la forme de formulation, ainsi qu'avec l'heure et la date, le lieu et le mode d'application, la nature des organismes nuisibles et le degré de lésion.

L'application du sulfure de zinc du premier objet de l'invention peut se faire par exemple par pulvérisation, par vaporisation, par poudrage, par diffusion de granulés et par fumigation, directement ou à l'aide d'appareils, sur des acariens nuisibles ou sur les lieux où les acariens nuisibles se développent.

Le sulfure de zinc de l'invention comme agent antiacarien peut également être mis en oeuvre dans toute composition, et en particulier dans toute composition ou produit utilisés dans le domaine des fils, fibres, filaments et articles textiles. Il peut en particulier être mis en oeuvre dans des compositions polymériques, ainsi que dans des compositions nettoyantes et/ou de traitement des surfaces textiles, notamment des tapis ou moquettes.

Ainsi le second objet de l'invention concerne des compositions à propriétés antiacariennes comprenant du sulfure de zinc comme additif, et notamment des compositions polymériques, de même que des compositions nettoyantes et/ou de traitement des surfaces textiles, notamment des tapis ou moquettes.

Le sulfure de zinc en tant qu'agent antiacarien peut être utilisé comme additif par exemple dans des formulations d'ensimage de fils, fibres et filaments, dans des formulations d'apprêts ou de teintures appliqués sur des surfaces textiles, dans des formulations détergentes telles que des lessives pour surfaces textiles (notamment pour tapis ou moquettes), dans des colles ou adhésifs utilisés par exemple pour la fabrication de moquettes ou de revêtements, dans des supports de surfaces textiles etc.

Selon un mode de réalisation particulier du second objet de l'invention, la proportion en poids de sulfure de zinc par rapport au poids total de la composition est inférieure ou égale à 5%.

Selon un premier mode de réalisation préférentiel du second objet de l'invention, la composition est une composition liquide ou solide pour le nettoyage et/ou le traitement de surfaces textiles, notamment de tapis ou de moquettes.

Lesdites compositions peuvent comprendre de 0,05 à 5% de leur poids sec de sulfure de zinc.

Lorsqu'il s'agit de compositions liquides, elles comprennent en outre de l'eau et éventuellement au moins un solvant organique. La quantité d'eau peut représenter au moins 10%, de préférence au moins 50% du poids de la composition ; cette quantité d'eau peut aller jusqu'à 98% du poids de la composition.

Parmi les solvants organiques, on peut mentionner les alcools aliphatiques, aromatiques, les ethers de glycol (méthanol, éthanol, propanol, isopropanol, propanediol, éthylène glycol, glycérol, benzyl alcool, butoxy propoxy propanol...), de même que des solvants « anti-graisse » tels que des terpènes. Ces solvants peuvent représenter de 0,1 à 50% du poids de la composition liquide.

Les compositions liquides peuvent en outre comprendre d'autres additifs usuels mis en oeuvre dans les compositions nettoyantes liquides des surfaces texiles, notamment tapis ou moquettes.

On peut mentionner notamment :

- des agents tensioactifs anioniques (alkylesters sulfonates, alkylsulfates, alkylamides sulfates, sels d'acides gras saturés ou insaturés ...), non-ioniques (dérivés polyalcoxylés d'alkylphénols, d'acides gras, d'amines, d'amides d'acides gras, d'amidoamines, les condensats d'oxyde d'éthylène ou de propylène avec l'éthylènediamine, les alkylpolyglucosides ...), amphotères (alkylamphoacétates ...) ou zwitterioniques (bétaines); ils peuvent représenter de 1 à 20%, de préférence de 5 à 15% du poids de la composition liquide ;
- des adjuvants de détergence (« builder ») inorganiques (polyphosphates, silicates, carbonates, zéolites ...) ou des « builders », chélatants ou séquestrants organiques (polyphosphonates hydrosolubles, polymères ou copolymères carboxyliques ou leurs sels hydrosolubles, acides polycarboxyliques ou leurs sels hydrosolubles, sels d'acides polyacétiques...); ils peuvent représenter de 5 à 80% du poids de la composition liquide ;
- des agents antisalissures (dérivés cellulosiques, copolymères polyesters à base de motifs éthylène téréphtalate et polyoxyéthylène téréphtalate, oligomères ou copolymères polyesters sulfonés ...) ; ils peuvent représenter de 0,01 à 10%, de préférence de 0,1 à 5% du poids de la composition liquide ;
- des agents de blanchiment (peroxyde d'hydrogène) ;
- des agents inhibiteurs de transfert de couleur (polyamines N-oxiyde, copolymères de N-vinylpyrrolidone et de N-vinylimidazole ;
- des agents supresseurs de mousses ;
- des propulseurs (isobutane, propane ...) ;
- et des additifs autres comme des enzymes, des agents tampons, des charges, des parfums ...

Lorsqu'il s'agit de compositions solides de nettoyage et/ou de traitement des surfaces textiles , elles comprennent en outre au moins une charge (« filler »), qui peut représenter de 40 à 98,5% du poids de la composition solide.

Ces « fillers » sont notamment de type Borax, de préférence des borates de sodium décahydratés, notamment le sodium tétraborate décahydraté ; il peut s'agir également des sels inorganiques tels que sulfates, chlorures, carbonates, bicarbonates, phosphates ou nitrates de sodium notamment, de sels d'aluminium comme l'aluminate de sodium, ainsi que le citrate de sodium.

Les compositions solides peuvent en outre comprendre d'autres additifs usuels mis en oeuvre dans les compositions nettoyantes solides des surfaces textiles, notammant des tapis ou moquettes.

On peut mentionner notamment :

- des adsorbants tels que des poudres de cellulose, des mousses de polyurethane, de la bentonite ;
- des alcools ethers tels que l'éthylène glycol monométhyl ether, diethylene glycol monométhyl ether, propylène glycol monométhyl ether, dipropylène glycol monométhyl ether, éthylène glycol monoéthyl ether, diethylene glycol monoéthyl ether, éthylène glycol monobuthyl ether ;
- des agents tensioactifs anioniques, non ioniques, cationiques ou amphotères, sous forme liquide ou solide, comme ceux décrits précédemment ;
- des agents anti-statiques tels que des oxydes d'aluminium, des sels d'ammonium quaternaires, des alcools éthoxylés, des alkyl phénols, des amines ethoxylées, des savons anioniques, des sulfates, des sulphonates ;

- des agents agglomérants.

Les compositions pour le nettoyage et/ou le traitement des surfaces textiles peuvent être déposées sur la surface à traiter par différentes méthodes :

- machine à haut débit de vapeur: expulsion de vapeur chaude sous haute pression, vaporisation sur la moquette puis aspiration sous vide.
- imprégnation directe de la formulation nettoyante sur la surface à traiter, avec frottement éventuel à l'aide d'une éponge ou d'une brosse. Le produit peut ensuite être enlevé par absorption sur un absorbant ou par aspiration sous vide.
- vaporisation de la formulation nettoyante sur la moquette sous forme de fines gouttes. Le produit peut éventuellement être séché par passage d'air chaud. Les résidus étant ensuite enlevés par aspiration ou brossage.
- application à l'aide d'une shampoineuse.

Les compositions liquides peuvent éventuellement être diluées à l'eau avant emploi.

Les compositions pour le nettoyage et/ou le traitement des articles textiles peuvent être mises en oeuvre selon des quantités, exprimées en matière sèche, de 0,01 à 200 mg/m$^2$ de surface à traiter.

Selon un deuxième mode de réalisation préférentiel du second objet de l'invention, la composition est une composition polymérique.

La composition polymérique de l'invention comprend une matrice polymérique. Toute matrice polymérique connue de l'homme du métier peut être mise en oeuvre dans le cadre de la présente invention.

La matrice polymérique de l'invention est de préférence une matrice thermoplastique. La matrice thermoplastique conforme à l'invention est un polymère thermoplastique.

A titre d'exemple de polymères pouvant convenir, on cite : les polylactones telles que la poly(pivalolactone), la poly(caprolactone) et les polymères de la même famille; les polyuréthanes obtenus par réaction entre des diisocyanates comme le 1,5-naphtalène diisocyanate; le p-phénylène diisocyanate, le m-phénylène diisocyanate, le 2,4-toluène diisocyanate, le 4,4'-diphénylméthane diisocyanate, le 3,3'-diméthyl-4,4'-diphénylméthane diisocyanate, le 3,3-'diméthyl-4,4'-biphényl diisocyanate, le 4,4'-diphénylisopropylidène diisocyanate, le 3,3'-diméthyl-4,4'-diphényl diisocyanate, le 3,3'-diméthyl-4,4'-diphénylméthane diisocyanate, le 3,3'-diméthoxy-4,4'-biphényl diisocyanate, le dianisidine diisocyanate, le toluidine diisocyanate, le hexaméthylène diisocyanate, le 4,4'-diisocyanatodiphénylméthane et composés de la même famille et les diols à longues chaînes linéaires comme le poly(tétraméthylène adipate), le poly(éthylène adipate), le poly(1,4 -butylène adipate), le poly(éthylène succinate), le poly(2,3-butylène succinate), les polyéther diols et composés de la même famille; les polycarbonates comme le poly[méthane bis(4-phényl) carbonate], le poly[1,1-éther bis(4-phényl) carbonate], le poly[diphénylméthane bis(4-phényl)carbonate], le poly[1,1-cyclohexane bis(4-phényl)carbonate] et polymères de la même famille; les polysulfones; les polyéthers; les polycétones; les polyamides comme le poly(4-amino butyrique acide), le poly(héxaméthylène adipamide), le poly(acide 6-aminohéxanoïque), le poly(m-xylylène adipamide), le poly(p-xylylène sébacamide), le poly(2,2,2-triméthyl héxaméthylène téréphtalamide), le poly(métaphénylène isophtalamide), le poly(p-phénylène téréphtalamide), et polymères de la même famille; les polyesters comme le poly(éthylène azélate), le poly(éthylène-1,5-naphtalate, le poly(1,4-cyclohexane diméthylène téréphtalate), le poly(éthylène oxybenzoate), le poly(para-hydroxy benzoate), le poly(1,4-cyclohéxylidène diméthylène téréphtalate), le poly(1,4-cyclohéxylidène diméthylène téréphtalate), le polyéthylène téréphtalate, le polybutylène téréphtalate et les polymères de la même famille; les poly(arylène oxydes) comme le poly(2,6-diméthyl-1,4-phénylène oxyde), le poly(2,6-diphényl-1,4-phénylène oxyde) et les polymères de la même famille ; les poly(arylène sulfides) comme le poly(phénylène sulfide) et les polymères de la même famille; les polyétherimides; les polymères vinyliques et leurs copolymères comme l'acétate de polyvinyle, l'alcool polyvinylique, le chlorure de polyvinyle; le polyvinyle butyral, le chlorure de polyvinylidène, les copolymères éthylène- acétate de vinyle, et les polymères de la même famille; les polymères acryliques, les polyacrylates et leurs copolymérés comme l'acrylate de polyéthyle, le poly(n-butyl acrylate), le polyméthylméthacrylate, le polyéthyl méthacrylate, le poly(n-butyl méthacrylate), le poly(n-propyl méthacrylate), le polyacrylamide, le polyacrylonitrile, le poly(acide acrylique), les copolymères éthylène- acide acrylique, les copolymères éthylène-alcool vinylique, les copolymères de l'acrylonitrile, les copolymères méthacrylate de méthyle - styrène , les copolymères éthylène-acrylate d'éthyle, les copolymères méthacrylate-butadiène-styrène, l'ABS, et les polymères de la même famille; les polyoléfines comme le poly(éthylène) basse densité, le poly(propylène), le poly(éthylène) chloré basse densité, le poly(4-méthyl-1-pentène), le poly(éthylène), le poly(styrène), et les polymères de la même famille; les ionomères; les poly(épichlorohydrines); les poly(uréthane) tels que produits de polymérisation de diols comme la glycérine, le triméthyloi-propane, le 1,2,6-hexanetriol, le sorbitol, le pentaérythritol, les polyéther polyols, les polyester polyols et composés de la même famille avec des polyisocyanates comme le 2,4-tolylène diisocyanate, le 2,6-tolylène diisocyanate, le 4,4'-diphénylméthane diisocyanate, le 1,6-héxaméthylène diisocyanate, le 4,4'-dicycohéxylméthane diisocyanate et les composés de la même famille; et les polysulfones telles que les produits de réaction entre un sel de sodium du 2,2-bis(4-hydroxyphényl) propane et de la 4,4'-dichlorodiphényl sulfone; les résines furane comme le poly(furane); les plastiques cellulose-ester comme l'acétate de cellulose, l'acétate-butyrate de cellulose, propionate de cellulose et les polymères de la même famille; les silicones comme le poly(diméthyl siloxane), le poly(diméthyl siloxane co-phénylméthyl siloxane), et les polymères de la même famille; les mélanges d'au moins deux des polymères précédents.

Selon une variante particulière de l'invention, la matrice thermoplastique est un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR 2 743 077, FR 2 779 730, US 5 959 069, EP 0 632 703, EP 0 682 057 et EP 0 832 149.

Selon une autre variante particulière de l'invention, la matrice thermoplastique de l'invention est un polymère de type arbre statistique, de préférence un copolyamide présentant une structure arbre statistique. Ces copolyamides de structure arbre statistique ainsi que leur procédé d'obtention sont notamment décrits dans le document WO 99/03909.

La matrice thermoplastique de l'invention peut également être une composition comprenant un polymère thermoplastique linéaire et un polymère thermoplastique étoile, H et/ou arbre tels que décrits ci-dessus.

Les compositions de l'invention peuvent également comprendre un copolyamide hyperbranché du type de ceux décrits dans le document WO 00/68298.

Les compositions de l'invention peuvent également comprendre toute combinaison de polymère thermoplastique étoile, H, arbre, copolyamide hyperbranché décrit ci-dessus.

Comme autre type de matrice polymérique pouvant être mise en oeuvre dans le cadre de l'invention, on peut citer le polymères thermostables : ces polymères sont de préférence infusibles ou présentent un point de ramollissement supérieur à 180°C, de préférence ≥ 200°C, ou supérieur. Ces polymères thermostables peuvent par exemple être choisis parmi les polyamides aromatiques, les polyamides imide tels que les polytrimellamide -imide, ou les polyimides tels que les polyimides obtenus selon le document EP 0119185, connus dans le commerce sous la marque P84. Les polyamides aromatiques peuvent être tels que décrits dans le brevet EP 0360707. Ils peuvent être obtenus selon le procédé décrit dans le brevet EP 0360707.

Comme autre matrice polymérique, on peut citer également la viscose, la cellulose, l'acétate de cellulose etc.

La matrice polymérique de l'invention peut également être du type des polymères utilisés dans les adhésifs, tels que les copolymères d'acétates de vinyles plastisol, les latex acryliques, les latex uréthanes, les PVC plastisol etc.

Parmi ces matrices polymériques, on préfère tout particulièrement les polyamides semi-cristallins, tels que le polyamide 6, le polyamide 6.6, le polyamide 11, le polyamide 12, le polyamide 4, les polyamides 4-6, 6-10, 6-12, 6-36, 12-12, les polyamides semi-aromatiques obtenus à partir d'acide téréphtalique et/ou isophtalique tels que le polyamide commercialisé sous le nom commercial AMODEL; les polyesters tels que le PET, le PBT, le PTT; les polyoléfines tels que le polypropylène, le polyéthylène; les polyamides aromatiques, les polyamide imide ou les polyimides; les latex tels que les latex acryliques et uréthane; le PVC, la viscose, la cellulose, l'acétate de cellulose; leurs copolymères et alliages.

Les compositions peuvent contenir tous les autres additifs pouvant être utilisés, par exemple des charges de renfort, des ignifugeants, des stabilisants aux UV, à la chaleur, des matifiants tels que le dioxyde de titane.

Le troisième objet de l'invention concerne les fils, fibres, filaments et articles obtenus à partir des compositions, et notamment des compositions polymériques décrites ci-dessus.

En effet, les compositions notamment polymériques selon l'invention peuvent être mises en forme de fils, fibres et filaments par filage. Elles peuvent également être mises en forme d'articles moulés, par exemple par injection ou par extrusion.

Les fils, fibres et filaments de l'invention peuvent être obtenus par exemple par filage en fondu, ou par filage par voie humide, des compositions notamment polymériques de l'invention.

Les compositions polymériques sont de préférence réalisées par introduction du sulfure de zinc dans le polymère fondu dans un dispositif de mélange, par exemple en amont d'un dispositif de filage.Elles peuvent également être réalisées par introduction du sulfure de zinc dans une solution de polymère, par exemple en amont d'un dispositif de filage par voie humide. Elles peuvent également être réalisées par introduction du sulfure de zinc dans le milieu réactionnel comprenant les monomères à l'origine du polymère (milieu de polymérisation).

Par filage des compositions notamment polymériques de l'invention, on peut obtenir par exemple des fils multifilamentaires continus, des fibres courtes ou longues, des monofilaments, des filés de fibres, des nappes, des rubans, des câbles etc. Il peut s'agir également de fils continus gonflants (BCF : "Bulk Continuous Filament"), utilisés notamment pour la fabrication de revêtements textiles, tels que les moquettes et tapis.

Tous les traitements classiques dans le domaine textile peuvent être appliqués aux fils, fibres et filaments de l'invention, tels que l'étirage, la texturation, la teinture etc.

Dans le domaine des fils, fibres, filaments textiles, la faible taille des particules de sulfure de zinc -dont le diamètre peut être de l'ordre de 0,3μm- est un avantage dans les procédés de filage notamment.

Les fils, fibres et filaments décrits ci-dessus présentent des propriétés antiacariennes permanentes.

L'invention concerne également des articles obtenus à partir des fils, fibres, filaments décrits ci-dessus. De tels articles peuvent être obtenus notamment à partir d'un seul type de fils, fibres, filaments ou au contraire à partir d'un mélanges de fils, fibres, filaments de types différents. L'article comprend au moins en partie des fils, fibres, filaments selon l'invention. Pour un type donné de fils, fibres, filaments -par exemple des fils, fibres, filaments ne contenant pas de sulfure de zinc-, des fils, fibres ou filaments de natures différentes peuvent être utilisés dans l'article de l'invention.

Comme articles, on peut citer par exemple des articles tissés, non tissés, tricotés.

La présente invention concerne également les articles textiles composites, c'est-à-dire les articles textiles à plusieurs composants. Ces composants peuvent être par exemple des fibres courtes, des supports, des adhésifs ou colles, des articles obtenus à partir de fils, fibres, filaments tels que des articles non tissés etc.

Comme articles textiles composites, on peut citer par exemple les surfaces floquées dont les principaux composants sont généralement des fibres courtes, un adhésif ou une colle, et un support.

On peut citer également les surfaces tuftées utilisées notamment dans les moquettes, les revêtements d'ameublement ou muraux etc., dont les principaux composants sont généralement des fils, fibres, filaments ou des articles obtenus à partir de fils, fibres, filaments, un support, et éventuellement un adhésif ou colle.

Dans le cadre de l'invention, au moins un des composants de l'article textile composite comprend du sulfure de zinc.

Dans une surface floquée par exemple, le sulfure de zinc peut être présent dans les fibres de la surface floquée et/ou dans la colle ou adhésif utilisé pour le floquage et/ou dans le support de la surface floquée.

Les fibres d'une surface floquée peuvent par exemple être des fibres selon l'invention. L'adhésif ou la colle d'une surface floquée ou tuftée peut être obtenu à partir d'une composition selon l'invention. Le support d'une surface floquée ou touffetée peut également être obtenu à partir d'une composition ou d'un article selon l'invention.

Les articles textiles décrits ci-dessus présentent des propriétés antiacariennes permanentes.

Les compositions, fils, fibres, filaments, articles et articles textiles composites peuvent être mis en oeuvre dans la fabrication de tout produit susceptible d'être en contact avec des acariens, tels que les moquettes, les tapis, les revêtements d'ameublement, les revêtements de surface, les canapés, les rideaux, la literie, les matelas et oreillers etc.

Les compositions, fils, fibres, filaments, articles et articles textiles composites de l'invention permettent de préférence un contrôle de population des acariens CP -tel que défini dans les exemples 12, 13 ou 14- après 6 semaines au moins égal à 50, le CP étant mesuré selon la norme AFNOR NF G 39-011. La méthode de mesure utilisée est l'une des méthodes décrites décrites dans les exemples 12, 13 ou 14, la méthode étant définie en fonction de la nature du type de produit à tester (composition, poudre, tricot, moquette etc.)

D'autres détails et avantages de l'invention apparaîtront plus clairement à la vue des exemples ci-dessous donnés uniquement à titre indicatif.

## EXEMPLES

**Exemple 1 - 7 : Préparation des échantillons de poudre de polyamide 6.6, de polyamide 6, de polypropylène ou de polyester additionnés ou non de ZnS.**

**Matrice PA 66**

Le polyamide 66 noté PA 66 mis en oeuvre est un Polyamide 66 ne comprenant pas de dioxyde de titane, de viscosité relative de 2,5 (mesurée à une concentration de 10 g/l dans de l'acide sulphurique à 96%).

Deux types de ZnS ont été utilisés :

☐ ZnS 1 : ZnS de granulométrie centrée autour de 0.3μm et présentant une pureté de 98%.

☐ ZnS 2 : ZnS de granulométrie centrée autour de 2.6μm et présentant une pureté de 99.99% commercialisé par la société Aldrich sous la référence 24462-7.

L'incorporation du ZnS dans le PA66 se fait par mélange de poudres. Le mélange est séché 16h à 80°C sous vide de 50 mbars environ puis introduit dans un dispositif d'extrusion qui assure le mélange en phase fondue. Les caractéristiques de marche de l'extrudeur sont les suivantes :

☐ Température du fondu : 285°C environ
☐ Temps de séjour en fondu : 3 minutes

Le jonc obtenu en sortie du dispositif d'extrusion est trempé dans de l'eau à 20°C environ puis concassé et broyé après refroidissement avec de la carboglace avec un broyeur ultra centrifuge Retsch ZM 1000. La granulométrie de la poudre obtenue est inférieure à 500μm.

Les compositions suivantes ont été réalisées

Le taux de ZnS est exprimé en poids de ZnS par rapport au poids total de la composition

| Référence | Taux de ZnS 1 (% p/p) | Taux de ZnS 2 (% p/p) |
|-----------|-----------------------|-----------------------|
| 1-a1 | 0 | 0 |
| 1-b1 | 0.5 | 0 |
| 1-c1 | 1 | 0 |
| 1-a2 | 0 | 0 |
| 1-b2 | 0 | 0.5 |
| 1-c2 | 0 | 1 |

**Matrice PA 6**

Deux types de polyamide 6, noté PA 6, ont été utilisés :

☐ PA 6-1 : PA 6, ne comprenant pas de dioxyde de titane, de viscosité relative de 2,5 (mesurée à une concentration de 10 g/l dans de l'acide sulphurique à 96%).

☐ PA 6-2 : polyamide 6, comprenant 0.3% de TiO2 et de viscosité relative de 2.7 (mesurée à une concentration de 10 g/l dans de l'acide sulphurique à 96%).

Le ZnS utilisé est le ZnS 1.

L'incorporation du ZnS dans ces PA6 se fait de la même façon que dans l'exemple 1.

Les caractéristiques de marche de l'extrudeur sont les suivantes :

☐ Température du fondu : 240°C environ

☐ Temps de séjour en fondu : 3 minutes

Le jonc obtenu en sortie du dispositif d'extrusion est trempé dans de l'eau à 20°C environ puis concassé et broyé après refroidissement avec de la carboglace avec un broyeur ultra centrifuge Retsch ZM 1000. La granulométrie de la poudre obtenue est inférieure à 500μm.

Les compositions suivantes ont été réalisées

Le taux de ZnS est exprimé en poids de ZnS par rapport au poids total de la composition

| Référence | Matrice PA 6 | Taux de ZnS (% p/p) |
|-----------|--------------|---------------------|
| 2-a | PA 6-1 | 0 |
| 2-b | PA 6-1 | 0.5 |
| 2-c | PA 6-1 | 1 |
| 3-a | PA 6-2 | 0 |
| 3-b | PA 6-2 | 0.5 |
| 3-c | PA 6-2 | 1 |

Des mélanges ont également été effectués en utilisant le PA 6-1, 0.5% en poids de ZnS 1 et un pourcentage donné de stabilisant et de pigments classiques.

Le stabilisant utilisé est incorporé sous forme de masterbatch de PA 6 comprenant 10% en poids de mélange de KI et CuI.

Les différents pigments utilisés sont également incorporés sous forme de masterbatch dont les caractéristiques sont les suivantes :

☐ Pigment noir : masterbatch de PA 6 comprenant 20% de pigment (réf Sandofil MP-HPLA-AN FG de Clariant)

- ☐ Pigment violet 1 : masterbatch de PA 6 comprenant 25% de pigment (réf Sandofil MP-BPL FG de Clariant)
- ☐ Pigment marron : masterbatch de PA 6 comprenant 50% de pigment (réf Sandofil MP-2GL-AN FG de Clariant)
- ☐ Pigment jaune : masterbatch de PA 6 comprenant 25% de pigment (réf Sandofil MP-2G AN FG de Clariant)
- ☐ Pigment bleu : masterbatch de PA 6 comprenant 20% de pigment (réf Sandofil MP-2GLS AN FG de Clariant)
- ☐ Pigment rouge : masterbatch de PA 6 comprenant 25% de pigment (réf Sandofil MP-G-AN FG de Clariant)

L'incorporation du ZnS, du stabilisant et des pigments dans le PA 6 se fait par mélange de poudres, de la même façon que dans l'exemple 1 et le mélange est extrudé avec les mêmes conditions opératoires que dans les exemples 2 et 3 ayant comme matrice le PA 6.

Les compositions suivantes ont été réalisées (base PA 6-1 + 0.5% ZnS 1)

| Référence | Taux ZnS (%p/p) | Taux de masterbatch de stabilisant (% p/p) | Masterbatch de pigments | |
|---|---|---|---|---|
| | | | Nature du pigment | Taux de masterbatch de pigment (%p/p) |
| 4-a1 | 0 | 0 | - | 0 |
| 4-a2 | 0.5 | 0 | - | 0 |
| 4-b1 | 0 | 0.2 | pigment noir | 1.6 |
| 4-b2 | 0.5 | 0.2 | pigment noir | 1.6 |
| 4-c1 | 0 | 0.2 | pigment violet 1 | 1.5 |
| 4-c2 | 0.5 | 0.2 | pigment violet 1 | 1.5 |
| 4-d1 | 0 | 0.2 | pigment marron | 2.0 |
| 4-d2 | 0.5 | 0.2 | pigment marron | 2.0 |
| 4-e1 | 0 | 0.2 | pigment jaune | 6.0 |
| 4-e2 | 0.5 | 0.2 | pigment jaune | 6.0 |
| 4-f1 | 0 | 0.2 | pigment bleu | 2.3 |
| 4-f2 | 0.5 | 0.2 | pigment bleu | 2.3 |
| 4-g1 | 0 | 0.2 | pigment rouge | 3.5 |
| 4-g2 | 0.5 | 0.2 | pigment rouge | 3.5 |

**Matrice polypropylène**

Le polypropylène noté PP mis en oeuvre est la référence Pro-Fax 6301 commerciailsée par la société Basell. Le ZnS utilisé est le ZnS 1.

L'incorporation du ZnS dans le PP se fait de la même façon que dans l'exemple 1 mais le mélange n'est pas séché avant extrusion mais simplement conservé dans un dessicateur sous P2O5. Les caractéristiques de marche de l'extrudeur sont précisées ci-après :

- ☐ Température du fondu : 210°C environ
- ☐ Temps de séjour en fondu : 3 minutes

Pour l'étape de broyage, le mélange est refroidi par carboglace et azote liquide.

Les compositions suivantes ont été réalisées

Le taux de ZnS est exprimé en poids de ZnS par rapport au poids total de la composition

| Référence | Taux de ZnS (% p/p) |
|---|---|
| 5-a | 0 |
| 5-b | 0.5 |
| 5-c | 1 |

**Matrice polyester**

Deux matrices polyester, notées PET, ont été mises en oeuvre :

☐ PET 1 : PET ne comprenant pas de dioxyde de titane, et dont l'indice de viscosité est 83.6 (mesuré à une concentration de 5 g/l dans un mélange 50/50 p/p de phénol et de dichlorobenzène).

☐ PET 2 : PET comprenant 0.4% de dioxyde de titane, et dont l'indice de viscosité est 74.6 (mesuré à une concentration de 5 g/l dans un mélange 50/50 p/p de phénol et de dichlorobenzène).

Le ZnS utilisé est le ZnS 1.

L'incorporation du ZnS dans le PET se fait de la même façon que dans l'exemple 1 mais le mélange est séché 16h à 150°C sous vide de 50 mbars environ. Les caractéristiques de marche de l'extrudeur sont précisées ci-après :

☐ Température du fondu : 280°C environ

☐ Temps de séjour en fondu : 3 minutes

Les compositions suivantes ont été réalisées

Le taux de ZnS est exprimé en poids de ZnS par rapport au poids total de la composition

| Référence | Matrice PET | Taux de ZnS (% p/p) |
|-----------|-------------|---------------------|
| 6-a | PET 1 | 0 |
| 6-b | PET 1 | 0.5 |
| 6-c | PET 1 | 1 |
| 7-a | PET 2 | 0 |
| 7-b | PET 2 | 0.5 |
| 7-c | PET 2 | 1 |

**Exemple 8 : Préparation de fils de polyamide 6.6 additionné ou non de ZnS et réalisation de surfaces tricotées**

Préparation des fils

Le polyamide 66 mis en oeuvre est un Polyamide 66 ne comprenant pas de dioxyde de titane, de viscosité relative de 2.5 (mesurée à une concentration de 10 g/l dans de l'acide sulphurique à 96%). Le ZnS utilisé est le ZnS 1. L'incorporation du ZnS dans le PA 66 se fait par mélange de poudres puis en phase fondue à l'aide d'un dispositif d'extrusion. Le mélange fondu est ensuite filé avec une température en tête de filière de 285°C environ, refroidi à l'air (20°C, humidité relative 66%), appelé avec une vitesse au premier point d'appel de 4200 m/min de manière à obtenir un fil continu multifilamentaire de 42 dtex pour 10 filaments. Le multifilament ou fil est constitué de 10 brins et le diamètre du brin est d'environ 20 µm.

Les compositions suivantes ont été réalisées

Le taux de ZnS est exprimé en poids de ZnS par rapport au poids total de la composition

| Référence | Taux de ZnS (% p/p) |
|-----------|---------------------|
| 8-a | 0 |
| 8-b | 1 |
| 8-c | 2 |

Caractérisation des échantillons

Les propriétés des fils obtenus sont précisées ci-après :

☐ Allongement rupture : 80 à 85% (selon la norme ISO 2062)

☐ Tenacité rupture : 22 à 24 cN/tex (selon la norme ISO 2062)

Réalisation des tricots

La réalisation des surfaces tricotées est effectuée par tricotage monochute. On obtient des chaussettes de 8 cm de diamètre environ ayant un poids par unité de surface de 35 g/m$^2$ environ. La numérotation des tricots écrus est identique à celle des fils : de 8-a à 8-c.

**Exemple 9 : Préparation de fils de polyamide 6.6 additionné ou non de ZnS et réalisation de surfaces tricotées**

Préparation de fils

Le polyamide 66 mis en oeuvre est un Polyamide 66 ne comprenant pas de dioxyde de titane, de viscosité relative de 2.6 (mesurée à une concentration de 10 g/l dans de l'acide sulphurique à 96%). Le ZnS est introduit sous forme de masterbatch. Le masterbatch est constitué de ZnS 1 introduit à 40% en poids dans du PA 6 de viscosité relative 2 (mesurée à une concentration de 10 g/l dans de l'acide sulphurique à 96%).

Il est introduit dans le PA 66 dans une extrudeuse à l'aide d'un doseur gravimétrique. Le fondu est ensuite filé avec une température en tête de filière de 286 °C environ, refroidi à l'eau et appelé avec une vitesse au premier point d'appel de 600 m/min, puis étiré à un taux d'environ 2.7 de manière à obtenir un fil continu multifilamentaire de 1250 dtex pour 68 filaments. Le multifilament ou fil est constitué de 68 brins et le diamètre du brin est d'environ 43 μm.

Les compositions suivantes ont été réalisées

Le taux de ZnS est exprimé en poids de ZnS par rapport au poids total de la composition

| Référence | Taux de ZnS (% p/p) |
|-----------|---------------------|
| 9-a | 0 |
| 9-b | 0.2 |
| 9-c | 1 |

A titre de comparaison, un fil de 1250dtex pour 68 filament contenant 0.3% de TiO2 a été ajouté à la série, il sera numéroté 9-e.

Caractérisation des échantillons

Les propriétés des fils obtenus sont précisées ci-après :

☐ Allongement rupture : 40 à 44% (selon la norme ISO 2062)
☐ Ténacité rupture : 20 à 21 cN/tex (selon la norme ISO 2062)

Réalisation des tricots

La réalisation des surfaces tricotées est effectuée par tricotage monochute. On obtient des chaussettes de 6 cm de diamètre environ ayant un poids par unité de surface de 300 g/m$^2$ environ. La numérotation des tricots écrus est identique à celle des fils : de 9-a à 9-c.

☐ Les tricots ont ensuite été teints en eau adoucie à pH 6 avec un rapport de bain de 1/50, selon une méthode connue de l'homme du métier.

Deux colorants différents ont été utilisés :

☐ Colorant 1 : colorant acide Acid Blue 80® commercialisé par la société CIBA.
☐ Colorant 2: colorant métallifère Acid Blue 284® commercialisé par la société Yorkshire.

Il n'a pas été remarqué de différence significative de prise de teinture entre les 5 tricots. Les échantillons sont alors numérotés comme indiqué dans le tableau ci-dessous

Le taux de ZnS est exprimé en poids de ZnS par rapport au poids total de la composition

| Référence | Taux de ZnS (% p/p) | Taux de TiO2 (% p/p) | Colorant |
|-----------|---------------------|----------------------|----------|
| 9-a1 | 0 | 0 | Colorant 1 |
| 9-b1 | 0.2 | 0 | Colorant 1 |
| 9-c1 | 1 | 0 | Colorant 1 |
| 9-d1 | 0 | 0.3 | Colorant 1 |
| 9-a2 | 0 | 0 | Colorant 2 |
| 9-b2 | 0.2 | 0 | Colorant 2 |
| 9-c2 | 1 | 0 | Colorant 2 |
| 9-d2 | 0 | 0.3 | Colorant 2 |

**Exemple 10 : Réalisation de moquettes avec les fils obtenus selon l'exemple 9**

Réalisation des fils pour le tuft

Les fils obtenus selon l'exemple 9 ont été préparés selon le procédé suivant : rassemblement de deux fils 1250/68 par retordage à 220 tours/m et thermofixation selon le procédé superba connu de l'homme du métier.
Les fils suivants ont été produits :

| Référence du fil 1250/68 | Référence du fil thermofixé pour le tuft |
|--------------------------|------------------------------------------|
| 9-a | 10-a |
| 9-b | 10-b |
| 9-c | 10-c |
| 9-d | 10-d |

Réalisation des moquettes

Les fils obtenus précédemment ont été tuftés sur un support primaire constitué d'une toile de rubans tissés de PP (référence : Ribbon 9020FS® commercialisé par la société Carpet Backing, Italie). Un tuft velours saxony a été produit. La jauge est de 1/10", avec 50 points pour 10 cm, une hauteur de tapis de 6 mm environ et un poids de 820 g de fils par m$^2$.
Les tufts obtenus précédemment ont parfois été teints selon le procédé suivant : 30 min à 98°C, pH 6 avec une formule de colorants composée de phosphate mono sodique, d'Univadine, de jaune Tectilon, de rouge Tectilon, de bleu Tectilon puis adoucis (20 minutes à 40°C une solution de Sandotex CD pâte 0,5%, et d'acide tartrique 0,2 g/l). Les tufts écrus ou teints ont été collés sur un support secondaire constitué d'une toile de PP (référence 72/730 HF® commercialisé par la société Carpet Backing, Italie). La colle utilisée est constituée de latex synthétiques SBS + 500 parties par poids de carbonate de calcium (référence de la colle : Latex VM 612 IM 1201 Polyfass® commercialisé par la société Synthomer). Elle est appliquée sur le backing primaire de façon à obtenir 950 g de colle par m$^2$ de tuft environ après séchage.
Les moquettes obtenues sont les suivantes :

| Référence du fil pour le tuft | Etape de teinture | Référence de la moquette |
|-------------------------------|-------------------|--------------------------|
| 10-a | non | 10-a1 |
| | oui | 10-a2 |
| 10-b | non | 10-b1 |
| | oui | 10-b2 |
| 10-c | non | 10-c1 |
| | oui | 10-c2 |

(suite)

| Référence du fil pour le tuft | Etape de teinture | Référence de la moquette |
|---|---|---|
| 10-d | non | 10-d1 |
| | oui | 10-d2 |

Les moquettes subissent ensuite un lavage extraction à l'eau avant le test d'activité.

**Exemple 11 : préparation des échantillons de colle pour moquette additionnés ou non de ZnS**

La colle utilisée est constituée de latex synthétiques SBS + 500 parties par poids de carbonate de calcium (référence de la colle : Latex VM 612® commercialisé par la société Synthomer). Le ZnS utilisé est le ZnS 1, il est introduit dans la colle sous forme de poudre puis mélangé avec un mixeur (Kika Labortechnik) pendant 5 à 10 min environ. La colle ainsi obtenue est étalée sur un carton sous forme d'un disque de 8 cm de diamètre et 2 à 3 mm d'épaisseur.
Les compositions suivantes ont été produites
Le taux de ZnS est exprimé en poids de ZnS par rapport au poids total de la composition

| Référence de la colle | Taux de ZnS (% p/p) |
|---|---|
| 11-a | 0 |
| 11-b | 5 |

**Exemple 12: Caractérisation du comportement par rapport aux acariens des échantillons de poudre pures de ZnS ou de poudres obtenues selon les exemples 1-7**

*Principe*

Cette caractérisation est réalisée par un laboratoire agréé par le Ministère de l'agriculture, de la pêche et de l'alimentation. L'objectif est d'évaluer l'efficacité de poudres de PA additivées ou non de ZnS sur le contrôle de l'évolution d'une population d'acariens de la poussière (*Dermatophagoïdes pteronyssinus*). Le suivi est effectué sur deux cycles de développement des acariens soit 6 semaines.

*Elevage d'origine des acariens*

Les acariens utilisés proviennent d'une souche de laboratoire élevée sur un substrat composé d'un mélange 50/50 (p/p) de germes de blé et de levures de bière en paillettes calibrées par tamisage (fragments inférieurs à 1 mm). La température est comprise entre 23 et 25°C et l'humidité relative maintenue à 75% par la mise en présence d'une solution saturée de sulfate d'ammoniaque. La souche est conservée à l'obscurité.
La souche est fournie par le Laboratoire des Insectes et Acariens des Denrées de l'Institut National de Recherches Agronomiques de Bordeaux (INRA) selon la norme AFNOR NF G 39-011.

*Méthode expérimentale*

La méthode s'inspire directement de la norme AFNOR NF G 39-011 avec les variantes suivantes :

☐ L'unité expérimentale est constituée d'une enceinte de 8 cm de diamètre étanche aux acariens mais autorisant une aération et dans laquelle se trouve :

■ 5 g de milieu nutritif (aliment 1 / annexe NF G 39-011)
■ 5 g de poudre à tester, tapissant le fond de l'enceinte

☐ la recherche est effectuée par dépôt de 50 acariens dans ces dispositifs
☐ 4 répétitions sont réalisées le même jour par facteur expérimental, y compris pour les lots témoins constitués du même dispositif mais avec la poudre non additivée. Le résultat est exprimé sous forme de moyenne et d'écart-type sur ces 4 échantillons.

Le contrôle consiste à compter le nombre d'acariens vivants après le délai de 6 semaines. Un comptage direct étant rendu impossible de par la structure du substrat, on utilise une extraction par la chaleur selon les recommandations de la norme AFNOR NF G 39-011.

Le critère d'efficacité d'un additif est alors défini comme le coefficient de contrôle de la population d'acariens (CP) soit :

$$CP = \frac{\text{(Population sur la poudre non additivée - population sur poudre additivée)}}{\text{Population sur la poudre non additivée}} \times 100$$

Les comptages de population étant tous réalisés à 6 semaines.

L'interprétation de CP est la suivante :

☐ Plus CP sera proche de 0, et moins l'additivation sera efficace puisque la population sur l'échantillon additivé progressera au même rythme que celle sur l'échantillon non additivé ;

☐ Plus CP sera proche de 100, et plus l'additivation sera efficace en ayant éradiqué la population d'acariens et enrayé son processus d'expansion.

### *Résultats expérimentaux*

Les tableaux suivants présentent la synthèse des données pour les différentes séries expérimentales :

Poudres pures de ZnS

Des poudres pures ont été testées :

☐ Poudre ZnS 1
☐ Poudre ZnS 2

Dans ce cas, le témoin de croissance pour les acariens est du PA 66 non extrudé. Les résultats sont les suivants

| *Référence* | *Nombre d'acariens vivants après 6 semaines* | | *CP* |
|---|---|---|---|
| | Moyenne | Ecart-type | Moyen |
| PA 66 non extrudé | 864 | 91 | |
| ZnS 1 | 318 | 31 | 63 |
| ZnS 2 | 305 | 30 | 65 |

L'expansion naturelle des acariens sur la poudre non additivée valide les essais dans la mesure où cela confirme les conditions extrêmement favorables auxquelles sont soumises les poudres : les populations d'acariens non soumises à l'additif ont en effet un facteur d'accroissement de plus de 15.

Dans les deux cas, le ZnS conduit à un contrôle de la population des acariens.

Poudres obtenues selon l'exemple 1 : matrice PA 66

Les résultats sont les suivants

| *Référence* | *Nombre d'acariens vivants après 6 semaines* | | *CP* |
|---|---|---|---|
| | Moyenne | Ecart-type | Moyen |
| 1-a1 | 939 | 65 | |
| 1-b1 | 84 | 8 | 91 |
| 1-c1 | 92 | 17 | 90 |

| Référence | Nombre d'acariens vivants après 6 semaines | | CP |
| --- | --- | --- | --- |
| | Moyenne | Ecart-type | Moyen |
| 1-a2 | 824 | 23 | |
| 1-b2 | 153 | 19 | 81 |
| 1-c2 | 133 | 15 | 84 |

Le témoin de croissance des acariens est conforme.

L'additivation de ZnS dans le PA 66 enraye le processus d'expansion de la population des acariens.

Un essai supplémentaire a été conduit sur deux poudres mais en sustituant, lors du test anti-acarien, les 5g de milieu nutritif classique par 200mg de milieu nutritif plus « naturel », composé de 50% p/p de poils de barbe préalablement lavés à l'éthanol et de 50% p/p de poussière domestique tamisée à 20μm.

Les résultats sont les suivants :

| Référence | Nombre d'acariens vivants après 6 semaines | | CP |
| --- | --- | --- | --- |
| | Moyenne | Ecart-type | Moyen |
| 1-a1 | 1017 | 114 | |
| 1-b1 | 196 | 16 | 81 |

Le témoin de croissance des acariens est conforme.

L'activité anti-acarienne du ZnS introduit dans le PA 66 est retrouvée même en présence d'une nourriture très riche pour les acariens.

Poudres obtenues selon les exemples 2 à 4 : matrice PA 6

Les résultats sont les suivants

| Référence | Nombre d'acariens vivants après 6 semaines | | CP |
| --- | --- | --- | --- |
| | Moyenne | Ecart-type | Moyen |
| 2-a | 707 | 23 | |
| 2-b | 131 | 10 | 81 |
| 2-c | 124 | 11 | 82 |
| | | | |

| Référence | Nombre d'acariens vivants après 6 semaines | | CP |
| --- | --- | --- | --- |
| | Moyenne | Ecart-type | Moyen |
| 3-a | 820 | 66 | |
| 3-b | 266 | 36 | 68 |
| 3-c | 244 | 27 | 70 |

| Référence | Nombre d'acariens vivants après 6 semaines | | CP |
| --- | --- | --- | --- |
| | Moyenne | Ecart-type | Moyen |
| 4-a1 | 707 | 23 | |
| 4-a2 | 131 | 10 | 81 |
| 4-b1 | 610 | 53 | |

(suite)

| Référence | Nombre d'acariens vivants après 6 semaines | | CP |
| --- | --- | --- | --- |
| | Moyenne | Ecart-type | Moyen |
| 4-b2 | 200 | 18 | 67 |
| 4-c1 | 782 | 45 | |
| 4-c2 | 205 | 29 | 74 |
| 4-d1 | 800 | 37 | |
| 4-d2 | 146 | 35 | 82 |
| 4-e1 | 847 | 41 | |
| 4-e2 | 114 | 19 | 87 |
| 4-f1 | 730 | 80 | |
| 4-f2 | 210 | 20 | 71 |
| 4-g1 | 749 | 68 | |
| 4-g2 | 211 | 25 | 72 |

Le témoin de croissance des acariens est conforme sur chaque témoin.

L'additivation de ZnS dans le PA 6 enraye le processus d'expansion de la population des acariens et ceci même en présence d'autres additifs (TiO2, stabilisant, pigments).

Poudres obtenues selon l'exemple 5 : matrice PP

Les résultats sont les suivants

| Référence | Nombre d'acariens vivants après 6 semaines | | CP |
| --- | --- | --- | --- |
| | Moyenne | Ecart-type | Moyen |
| 5-a | 833 | 55 | |
| 5-b | 359 | 36 | 57 |
| 5-c | 219 | 32 | 74 |

Le témoin de croissance des acariens est conforme.

L'additivation de ZnS dans le PP enraye le processus d'expansion de la population des acariens.

Poudres obtenues selon les exemples 6 et 7 : matrice PET

Les résultats sont les suivants

| Référence | Nombre d'acariens vivants après 6 semaines | | CP |
| --- | --- | --- | --- |
| | Moyenne | Ecart-type | Moyen |
| 6-a | 870 | 61 | |
| 6-b | 343 | 27 | 61 |
| 6-c | 186 | 18 | 79 |

| Référence | Nombre d'acariens vivants après 6 semaines | | CP |
| --- | --- | --- | --- |
| | Moyenne | Ecart-type | Moyen |
| 7-a | 870 | 56 | |
| 7-b | 217 | 47 | 75 |
| 7-c | 227 | 36 | 74 |

Le témoin de croissance des acariens est conforme.

L'additivation de ZnS dans le PET enraye le processus d'expansion de la population des acariens.

**Exemple 13 : Caractérisation du comportement par rapport aux acariens de tricots obtenus selon les exemples 8 et 9, de moquettes obtenues selon l'exemple 10, de colles obtenues selon l'exemple 11**

*Méthode expérimentale*

Cette caractérisation est réalisée dans le même laboratoire qui a effectué les tests de l'exemple 12. Le principe de la caractérisation, l'origine des acariens sont identiques. La méthode est similaire sauf que l'unité expérimentale est constituée d'une enceinte de 8 cm de diamètre étanche aux acariens mais autorisant une aération et dans laquelle se trouve :

☐  5 g de milieu nutritif (aliment 1 / annexe NF G 39-011)
☐  une parcelle de tricot, de moquette ou de colle à tester tapissant le fond de l'enceinte.

Le mode de comptage des acariens et le calcul du coefficient de contrôle de la population d'acariens (CP) est identique à l'exemple 12.

$$CP = \frac{\text{(Population sur la parcelle non additivée - population sur parcelle additivée)}}{\text{Population sur la parcelle non additivée}} \times 100$$

Les comptages de population étant tous réalisés à 6 semaines.

*Résultats expérimentaux*

Les tableaux suivants présentent la synthèse des données pour les différentes séries expérimentales :

Tricots obtenus selon l'exemple 8

Les résultats sont les suivants

| Référence | Nombre d'acariens vivants après 6 semaines | | CP |
| --- | --- | --- | --- |
| | Moyenne | Ecart-type | Moyen |
| 8-a | 848 | 50 | |
| 8-b | 257 | 24 | 72 |
| 8-c | 177 | 16 | 81 |

Le témoin de croissance des acariens est conforme sur le tricot témoin.

L'activité anti-acarienne du ZnS est retrouvée après l'étape de filage et de tricotage : l'additivation de ZnS dans le PA 66 enraye le processus d'expansion de la population des acariens.

Tricots obtenus selon l'exemple 9

Les résultats sont les suivants :

**17**

| Référence | Nombre d'acariens vivants après 6 semaines | | CP |
|---|---|---|---|
| | Moyenne | Ecart-type | Moyen |
| 9-a | 878 | 26 | |
| 9-b | 391 | 24 | 55 |

| Référence | Nombre d'acariens vivants après 6 semaines | | CP |
|---|---|---|---|
| | Moyenne | Ecart-type | Moyen |
| 9-a1 | 809 | 46 | |
| 9-b1 | 348 | 34 | 57 |

| Référence | Nombre d'acariens vivants après 6 semaines | | CP |
|---|---|---|---|
| | Moyenne | Ecart-type | Moyen |
| 9-a2 | 794 | 88 | |
| 9-b2 | 319 | 25 | 60 |

Le témoin de croissance des acariens est conforme sur les tricots témoins écrus ou teints.

L'activité anti-acarienne du ZnS est retrouvée après l'étape de filage, de tricotage et de teinture : l'additivation de ZnS dans le PA 66 enraye le processus d'expansion de la population des acariens.

Moquettes obtenues selon l'exemple 10

Les résultats sont les suivants :

| Référence | Nombre d'acariens vivants après 6 semaines | | CP |
|---|---|---|---|
| | Moyenne | Ecart-type | Moyen |
| 10-a1 | 852 | 27 | |
| 10-b1 | 258 | 44 | 70 |
| 10-c1 | 129 | 15 | 85 |
| 10-d1 | 800 | 30 | 7 |

| Référence | Nombre d'acariens vivants après 6 semaines | | CP |
|---|---|---|---|
| | Moyenne | Ecart-type | Moyen |
| 10-a2 | 791 | 29 | |
| 10-b2 | 275 | 17 | 65 |
| 10-c2 | 112 | 12 | 86 |
| 10-d2 | 757 | 38 | 4 |

Le témoin de croissance des acariens est conforme sur les moquettes témoins écrues ou teintes.

L'activité anti-acarienne du ZnS est retrouvée après l'étape de filage, de construction de la moquette et de teinture : l'additivation de ZnS dans le PA 66 enraye le processus d'expansion de la population des acariens.

Un essai supplémentaire a été conduit sur les mêmes moquettes teintes mais en laissant un délai de croissance des acariens de 9 semaines au lieu des 6 semaines habituellement utilisées. Les résultats sont les suivants :

| Référence | Nombre d'acariens vivants après 6 semaines | | CP |
| --- | --- | --- | --- |
| | Moyenne | Ecart-type | Moyen |
| 10-a2 | 1180 | 24 | |
| 10-c2 | 119 | 7 | 90 |
| 10-d2 | 1170 | 106 | 1 |

Le témoin de croissance des acariens est conforme sur les moquettes témoins teintes.

L'activité anti-acarienne du ZnS est retrouvée confirmée sur une durée plus longue et a même tendance à s'accentuer.

Colles obtenues selon l'exemple 11

Les résultats sont les suivants

| Référence | Nombre d'acariens vivants après 6 semaines | | CP |
| --- | --- | --- | --- |
| | Moyenne | Ecart-type | Moyen |
| 11-a | 786 | 39 | |
| 11-b | 406 | 20 | 51 |

Le témoin de croissance des acariens est conforme sur le tricot témoin.

**Exemple 14 : Caractérisation du comportement par rapport aux acariens de moquettes PA traitées en surface avec de la poudre de ZnS**

*Principe*

L'objet de cette étude est d'évaluer l'efficacité d'une poudre destinée à être appliquée sur les revêtements de sols en traitement curatif et/ou préventif pour lutter contre les populations d'acariens de la poussière.

Cette caractérisation est réalisée dans le même laboratoire qui a effectué les tests de l'exemple 12. L'origine des acariens est identique

L'essai comporte deux volets :

☐ un essai curatif par dépôt du produit sur une population d'acariens en place,
☐ un essai préventif avec dépôt d'acariens sur des surfaces de moquettes préalablement traitées avec le produit.

Le suivi s'effectue sur une durée d'au moins deux cycles, soit 6 semaines et en comparaison avec une population non soumise au produit..

*Méthode expérimentale*

La méthode expérimentale s'inspire du cadre expérimental de la norme AFNOR NF G 39-011.

L'unité expérimentale est constituée par une enceinte de 8 cm de diamètre étanche aux acariens mais autorisant une aération et dans laquelle se trouvent :

☐ une parcelle de moquette rase polyamide en plancher
☐ 5g de milieu nutritif (poussière + squames de peau)
☐ la dose correspondante de la poudre à tester

Le ZnS testé est le ZnS 1.

Procédure essai curatif:

- ☐ environ 50 acariens actifs sont déposés sur les moquettes
- ☐ le produit à tester est mélangé à la nourriture et saupoudré avec une salière sur la moquette contenant les acariens
- ☐ 4 répétitions sont réalisées le même jour par facteur expérimental, y compris pour les lots témoin constitués du même dispositif mais sans le produit
- ☐ le produit est appliqué à raison de 160 mg/m$^2$
- ☐ 2 comptages des populations d'acariens sont réalisés après 4 et 6 semaines d'incubation en conditions optimales de développement

Procédure essai préventif :

- ☐ le produit est mélangé à la nourriture et saupoudré avec une salière sur des parcelles de moquettes sans acariens
- ☐ un mois plus tard, environ 50 acariens actifs sont déposés sur les moquettes traitées
- ☐ 4 répétitions sont réalisées par facteur expérimental, y compris pour les lots témoin constitués du même dispositif mais sans le produit (même témoin que pour l'essai curatif)
- ☐ le produit est appliqué à raison de 10, 40, 80 et 160 mg/m$^2$
- ☐ un comptage des populations d'acariens est réalisé après 6 semaines d'incubation en conditions optimales de développement

Les contrôles consistent à compter le nombre d'acariens vivants après le délai de 4 ou 6 semaines d'incubation.

Le mode de comptage des acariens et le calcul du coefficient de contrôle de la population d'acariens (CP) est identique à l'exemple 12.

$$CP = \frac{(\text{Population sur la parcelle non traitée - population sur parcelle traitée})}{\text{Population sur la parcelle non traitée}} \times 100$$

Les comptages de population sur témoin et traité sont tous réalisés à même nombre de semaines.

## **PLAN EXPERIMENTAL**

Essai curatif :

- ☐ poudre testée : 160 mg/m$^2$
- ☐ témoin non traité

Essai préventif :

- ☐ poudre testée : 10, 40, 80 et 160 mg/m$^2$
- ☐ témoin non traité

### *Résultats expérimentaux*

Les tableaux suivants présentent la synthèse des données pour les différentes séries expérimentales :

Essai curatif

Les résultats sont les suivants

| Traitement | Quantité (mg/m$^2$) | Nombre d'acariens vivants après 4 semaines | | CP 4 sem | Nombre d'acariens vivants après 6 semaines | | CP 6 sem |
|---|---|---|---|---|---|---|---|
| | | Moyenne | Ecart-type | Moyen | Moyenne | Ecart-type | Moyen |
| rien | | 257 | 39 | | 905 | 32 | |
| ZnS 1 | 160 | 148 | 26 | 42 | 284 | 26 | 69 |

Le témoin de croissance des acariens est conforme sur la moquette non traitée.

L'activité anti-acarienne du ZnS est retrouvée, l'effet est croissant avec le temps d'incubation.

Essai préventif

Les résultats sont les suivants

| Traitement | Quantité (mg/m$^2$) | Nombre d'acariens vivants après 4 semaines | | CP 4 sem | Nombre d'acariens vivants après 6 semaines | | CP 6 sem |
|---|---|---|---|---|---|---|---|
| | | Moyenne | Ecart-type | Moyen | Moyenne | Ecart-type | Moyen |
| rien | | 257 | 39 | | 905 | 32 | |
| ZnS 1 | 10 | 242 | 29 | 6 | 849 | 37 | 6 |
| ZnS 1 | 40 | 154 | 19 | 40 | 361 | 20 | 60 |
| ZnS 1 | 80 | 142 | 14 | 45 | 315 | 33 | 65 |
| ZnS 1 | 160 | 123 | 12 | 52 | 290 | 28 | 68 |

Le témoin de croissance des acariens est conforme sur la moquette non traitée.

L'activité anti-acarienne du ZnS est retrouvée, l'effet est croissant avec le temps d'incubation et la concentration déposée sur la moquette.

**Exemple 15: Composition liquide à propriétés antiacariennes pour surfaces textiles**

| Ingrédients | Fonction | % massique |
|---|---|---|
| Eau | | 90,5% |
| ZnS | | 1% |
| Polymère acrylique | | 0,2% |
| 2-amino-2-méthyl -1 propanol | | 0,2% |
| C12-C14 alcool éthoxylé 7OE | Tensioactif non ionique | 0,1% |
| Hydrocarbone isoparaffinique | Solvant | 8% |

**Exemple 16: Composition liquide à propriétés antiacariennes pour surfaces textiles**

| Ingrédients | Fonction | % massique |
|---|---|---|
| Eau | | 75,5% |
| ZnS | | 2% |
| Lauryl ether sulfate de sodium | Tensioactif anionique | 10% |
| Lauramide sulfosuccinate disodique | Tensioactif anionique | 10% |

(suite)

| Ingrédients | Fonction | % massique |
|---|---|---|
| Isopropanol | Solvant | 2% |
| EDTA (acide éthylènediamine tétraacétique) | Séquestrant | 0,5% |

**Exemple 17 : Composition détachante liquide à propriétés antiacariennes pour surfaces textiles**

| Ingrédients | Fonction | % massique |
|---|---|---|
| Eau | | 93,72% |
| ZnS | | 0,08 % |
| Tripropylene glycol methyl ether | Solvant hydrophobe | 5% |
| C10-C12 alcool ethoxylé 2,6 OE | Tensioactif non ionique | 0,5% |
| Lauryl sulfate de sodium | Tensioactif anionique | 0,3% |
| EDTA | Séquestrant | 0,4% |

**Exemple 18: Composition pulvérulente à propriétés antiacariennes pour le nettoyage de moquettes**

| Ingrédients | Fonction | % massique |
|---|---|---|
| Borate de sodium decahydraté | | 79% |
| ZnS | | 1% |
| Oxyde d'aluminium | | 12% |
| Ethylène glycol monoethyl ether | | 6% |
| Polyethylene glycol d'alcool linéaire | Tensioactif non ionique | 1% |
| Parfum | | 0,5% |
| Agent anti-mottant | | 0,5% |

**Exemple 19 : Composition aérosol à propriétés antiacariennes pour le nettoyage de moquettes**

| ingrédients | Fonction | % massique |
|---|---|---|
| Lauryl sulfate de sodium | Tensioactif moussant | 2,5% |
| ZnS | | 1% |
| Lauryl sarcosinate de sodium | Tensioactif anionique | 3,5% |
| Dipropylene glycol N-propyl ether | Solvant | 3% |
| Polyethylene glycol monooléate | | 0,3% |
| Isobutane | Propulseur | 4,25% |
| propane | Propulseur | 0,75% |
| parfum | | 0,5% |
| Sodium tetraborate | Agent oxydant | 0,75% |

(suite)

| ingrédients | Fonction | % massique |
|---|---|---|
| eau | | 83,45% |

**Revendications**

**1.** Utilisation du sulfure de zinc comme agent antiacarien.

**2.** Utilisation selon la revendication 1 dans des formulations d'ensimage de fils, fibres, filaments.

**3.** Utilisation selon la revendication 1 dans une composition liquide ou solide pour le nettoyage et/ou le traitement de surfaces textiles.

**4.** Utilisation selon la revendication 1 dans des fils, fibres, filaments obtenus par filage d'une composition polymérique comprenant le sulfure de zinc.

**5.** Utilisation selon la revendication 4, **caractérisée en ce que** la composition polymérique comprend une matrice thermoplastique.

**6.** Utilisation selon la revendication 5, **caractérisée en ce que** la matrice thermoplastique est un polyamide, un copolyamide ou un alliage de polyamides.

**7.** Utilisation selon la revendication 5 **caractérisée en ce que** la matrice thermoplastique est un polyester, un copolyester ou un alliage de polyesters.

**8.** Utilisation selon la revendication 1 dans un article obtenu à partir de fils, fibres. filaments, tels que décrits dans l'une des revendications 4 à 7.

**9.** Utilisation selon la revendication 1 dans un article textile composite, le sulfure de zinc étant présent dans au moins un des composants de l'article.

**10.** Utilisation selon la revendication 9, **caractérisé en ce que** l'article textile est une surface floquée.

**11.** Utilisation selon la revendication 9 **caractérisée en ce que** l'article textile est une surface tuftée.

**Patentansprüche**

**1.** Verwendung von Zinksulfid als Mittel gegen Milben.

**2.** Verwendung gemäß Anspruch 1 in Formulierungen zum Schlichten von Fäden, Fasern, Filamenten.

**3.** Verwendung gemäß Anspruch 1 in einer flüssigen oder festen Zusammensetzung für die Reinigung und/oder die Behandlung von textilen Oberflächen.

**4.** Verwendung gemäß Anspruch 1 in Fäden, Fasern, Filamenten, die durch Spinnen einer Polymerzusammensetzung, die Zinksulfid umfasst, erhalten werden.

**5.** Verwendung gemäß Anspruch 4, **dadurch gekennzeichnet, dass** die Polymerzusammensetzung eine thermoplastische Matrix umfasst.

**6.** Verwendung gemäß Anspruch 5, **dadurch gekennzeichnet, dass** die thermoplastische Matrix ein Polyamid, ein Copolyamid oder eine Polyamidlegierung ist.

**7.** Verwendung gemäß Anspruch 5, **dadurch gekennzeichnet, dass** die thermoplastische Matrix ein Polyester, ein Copolyester oder eine Polyesterlegierung ist.

8. Verwendung gemäß Anspruch 1 in einem Artikel, der aus Fäden, Fasern, Filamenten, wie in einem der Ansprüche 4 bis 7 beschrieben, erhalten wird.

9. Verwendung gemäß Anspruch 1 in einem textilen Verbundartikel, wobei das Zinksulfid in wenigstens einem der Bestandteile des Artikels vorhanden ist.

10. Verwendung gemäß Anspruch 9, **dadurch gekennzeichnet, dass** der textile Artikel eine beflockte Oberfläche ist.

11. Verwendung gemäß Anspruch 9, **dadurch gekennzeichnet, dass** der textile Artikel eine getuftete Oberfläche ist.

**Claims**

1. Use of zinc sulphide as acaricide.

2. Use according to Claim 1, in sizing formulations for yarns, fibres or filaments.

3. Use according to Claim 1, in a liquid or solid composition for cleaning and/or treating textile surfaces.

4. Use according to Claim 1, in yarns, fibres or filaments obtained by spinning a polymeric composition comprising zinc sulphide.

5. Use according to Claim 4, **characterized in that** polymeric composition comprises a thermoplastic matrix.

6. Use according to Claim 5, **characterized in that** the thermoplastic matrix is a polyamide, a copolyamide or a blend of polyamides.

7. Use according to Claim 5, **characterized in that** the thermoplastic matrix is a polyester, a copolyester or a blend of polyesters.

8. Use according to Claim 1, in an article obtained from yarns, fibres or filaments as are disclosed in one of Claims 4 to 7.

9. Use according to Claim 1, in a composite textile article, the zinc sulphide being present in at least one of the components of the article.

10. Use according to Claim 9, **characterized in that** the textile article is a flocked surface.

11. Use according to Claim 9, **characterized in that** the textile article is a tufted surface.